# EUROPÄISCHE PATENTSCHRIFT

(11) **EP 0 857 292 B1**
(45) Veröffentlichungstag und Bekanntmachung des Hinweises auf die Patenterteilung: **04.06.2003**
(21) Anmeldenummer: 97932741.8
(22) Anmeldetag: 05.07.1997
(51) Int. Cl.: G01D 5/14, G01D 5/16, G01B 7/30

(54) **MESSVORRICHTUNG ZUR BERÜHRUNGSLOSEN ERFASSUNG EINES DREHWINKELS**
MEASURING DEVICE FOR CONTACTLESS CAPTURE OF THE ANGLE OF ROTATION
DISPOSITIF DE DETECTION SANS CONTACT D'UN ANGLE DE ROTATION

(30) Priorität: 24.08.1996 DE 19634282
(43) Veröffentlichungstag der Anmeldung: 12.08.1998
(73) Patentinhaber: ROBERT BOSCH GMBH, 70442 Stuttgart (DE)
(72) Erfinder: HERDEN, Werner, D-70839 Gerlingen (DE); BIELERT, Friedrich, D-37073 Göttingen (DE)
(86) Internationale Anmeldenummer: DE9701421
(87) Internationale Veröffentlichungsnummer: WO98008060

(56) Entgegenhaltungen:
- EP-A- 0 665 416
- DE-A- 1 548 591
- FR-A- 2 670 286

## Beschreibung

### Stand der Technik

Die Erfindung geht aus von einer Meßvorrichtung zur berührungslosen Erfassung eines Drehwinkels nach der Gattung des Anspruchs 1. Aus der FR-A-2 670 286 ist eine Meßvorrichtung bekannt, bei der ein Stator und ein Rotor relativ zueinander bewegt werden. Zwischen dem jeweils aus magnetisch leitendem Material bestehenden Stator und dem Rotor befindet sich ein kleiner Luftspalt. Im Rotor ist über eine Länge von 180° ein erster ringförmiger Permanentmagnet angeordnet, der radial polarisiert ist. Im übrigen, ebenfalls 180° aufweisenden Bereich des Stators befindet sich ein zweiter ringförmiger Permanentmagnet mit gegensinniger Polarisation. Ferner weist der Stator zwei diametral gegenüberliegende Luftspalte auf. Wenigstens in einem dieser Luftspalte ist ein Hallsensor angeordnet. Bei der Drehbewegung des Rotors gegenüber dem Stator verändert sich die Stärke des durch den Hallsensor verlaufenden Magnetfelds. Der lineare Meßbereich des so erzeugten Meßsignals ist aber auf eine Größe von ca. ± 75° begrenzt. Ferner weist dieser lineare Meßbereich einen Vorzeichenwechsel auf. In aufwendiger weise könnte dieser Vorzeichenwechsel mit Hilfe einer elektrischen Schaltung beseitigt werden.

### Vorteile der Erfindung

Die erfindungsgemäße Meßvorrichtung zur berührungslosen Erfassung eines Drehwinkels mit den kennzeichnenden Merkmalen des Anspruchs 1 hat demgegenüber den Vorteil, daß ein linearer Meßbereich von größer als ± 110° möglich ist, ohne daß im linearen Meßbereich ein Vorzeichenwechsel der Meßspannung auftritt. Dieser vorzeichenwechselfreie lineare Meßbereich ist in beiden Drehrichtungen der Meßvorrichtung, also bei positiver oder negativer Drehrichtung, möglich. Man erhält dadurch auch zwei lineare Meßbereiche. Mit Hilfe der Zusatzmagnete kann in einfacher Weise durch vertikale Verschiebung der Meßkurve ein vorzeichenwechselfreier linearer Meßbereich erreicht werden. In einfacher Weise kann die vertikale Verschiebung der Meßkurve durch die Stärke und die Polarisationsrichtung des Zusatzmagneten gesteuert werden. Die Verschieberichtung ist von der Magnetisierungsrichtung des Zusatzmagneten abhängig. Die erzeugte Vormagnetisierung des magnetfeldempfindlichen Elements und somit die Verschiebung der Meßkurve ist drehwinkelunabhängig. Ferner ist die Vormagnetisierung bei Verdrehen des Rotors, also während der Messung selbst, konstant.

Durch die in den Unteransprüchen aufgeführten Maßnahmen sind vorteilhafte Weiterbildungen und Verbesserungen der im Hauptanspruch angegebenen Meßvorrichtung möglich.

### Zeichnung

Ausführungsbeispiele der Erfindung sind in der Zeichnung dargestellt und in der nachfolgenden Beschreibung näher erläutert. In der Figur 1 ist ein Längsschnitt durch ein erstes Ausführungsbeispiel mit zwei Ringmagneten, in der Figur 2 ein Ausführungsbeispiel der Meßvorrichtung mit nur einem Ringmagneten, in der Figur 3 ein drittes Ausführungsbeispiel mit einem im Stator durchgehenden Schlitz dargestellt. Die Figur 4 zeigt den Verlauf der Meßkurve, d.h. der Induktion B über den Drehwinkel a mit und ohne einem Zusatzmagneten.

### Beschreibung der Ausführungsbeispiele

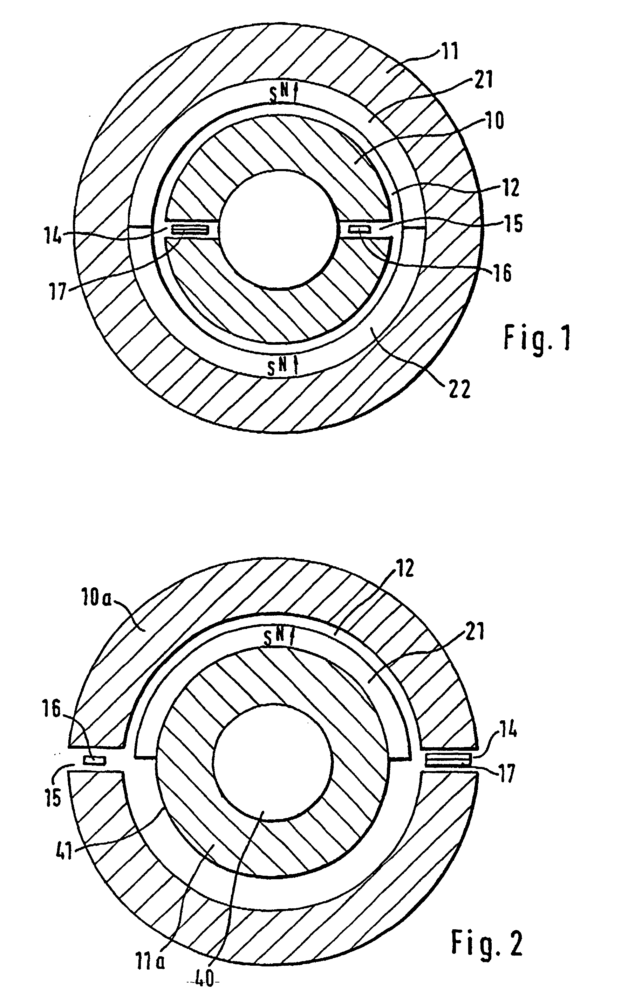

In der Figur 1 ist mit 10 ein Stator bezeichnet, der von einem Rotor 11 umgeben ist. Zwischen Stator 10 und Rotor 11 befindet sich ein Luftspalt 12, der möglichst klein sein soll und in der Praxis etwa 0,5 mm beträgt. Der Stator 10 und der Rotor 11 bestehen aus einem magnetisch leitenden Material mit hoher Permeabilität und geringer magnetischer Hysterese. Hierbei kann es sich zum Beispiel um Weicheisen handeln. Der Stator 10 weist ferner zwei diametral gegenüberliegende schlitzartige Luftspalte 14, 15 auf, wobei sich mindestens im Luftspalt 15 mindestens ein Hall-Element 16 befindet, mit dem die Relativbewegung des Rotors 11 gegenüber dem Stator 10 bestimmt wird. Statt eines Hall-Elements kann auch jedes andere magnetfeldempfindliche Bauteil, wie zum Beispiel Feldplatte, Magnettransistor, magnetoresistives Element etc. verwendet werden. Wichtig hierbei ist aber, daß das magnetfeldempfindliche Bauteil eine möglichst lineare Abhängigkeit seines Ausgangssignals von der magnetischen Induktion B aufweist. Im zweiten Luftspalt 14 ist ein Zusatzmagnet 17 angeordnet, der so ausgerichtet ist, daß seine Polarität parallel zu dem Feldlinienverlauf im Stator 10 ausgerichtet ist. Als Zusatzmagnet 17 eignet sich besonders ein Permanentmagnet.

Um ein Meßsignal mit Hilfe des Hall-Elements 16 erzeugen zu können, ist in der dem Stator 10 zugewandten Innenwand des Rotors 11 ein erster (21) und ein zweiter (22) Ringmagnet eingelassen. Beide Ringmagnete (21, 22) haben einen Winkelbereich von 180°. Die magnetische Polarisierung der beiden Ringmagnete 21, 22 ist je radial und gegensinnig ausgerichtet, was bedeutet, daß zum Beispiel beim ersten Ringmagnet 21, wie in der Figur 1 eingezeichnet, der magnetische Nordpol sich an der Innenwand des Rotors 11 befindet, während beim zweiten Ringmagneten 22 der magnetische Südpol sich an der Innenwand des Rotors 11 befindet. Als Ringmagnete 21, 22 sowie als Zusatzmagnet 17 können im Handel übliche Permanentmagnete verwendet werden. Auch können die Ringmagnete bzw. der Zusatzmagnet vor ihrem Einbau entsprechend aufmagnetisiert werden. Vorteilhaft ist es aber, wenn der Permanentmagnet bzw. der Magnetwerkstoff für die Ringmagnete in eine Kunststoffmasse eingebunden ist. Hierbei kann der Magnetwerkstoff im Spritzverfahren realisiert werden. Dadurch ist eine hohe Maßgenauigkeit und eine kostengünstige Herstellung der Ringmagnete 21, 22 möglich. Zudem können im Kunststoffspritzverfahren die Ringmagnete direkt in Ausnehmungen des Rotors eingespritzt werden. Als Magnetwerkstoff kann zum Beispiel SmCo₅, Sm₂Co₁₇, NdFeB, AlNiCo oder Ferrite eingesetzt werden. Die Ausrichtung des Zusatzmagneten 17 ist so, daß sein Magnetfluß zum Magnetfluß der Ringmagneten 21, 22 hinzuaddiert oder subtrahiert wird, so daß eine Vormagnetisierung unabhängig vom Drehwinkel des magnetfeldempfindlichen Elements entsteht.

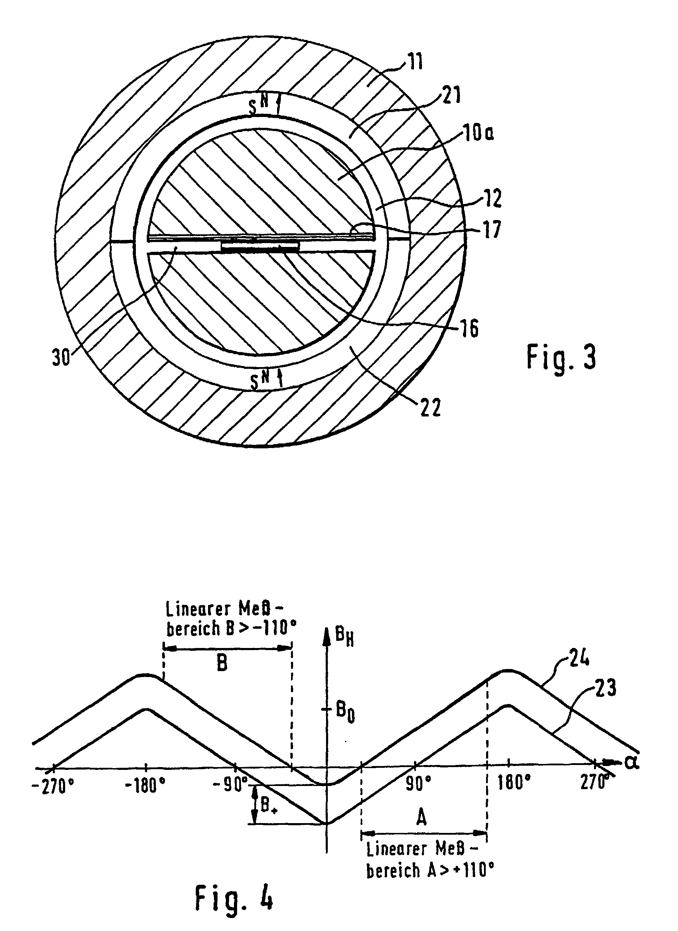

Aufgrund der Ringmagnete 21, 22 wird ein magnetischer Fluß 25 im Rotor 11 und im Stator 10 bewirkt. Die magnetischen Feldlinien dieses magnetischen Flusses 25 verlaufen hierbei vom magnetischen Nordpol des ersten Ringmagneten 21 durch den Rotor 11 zum Südpol des zweiten Ringmagneten 22 bzw. vom Nordpol des zweiten Ringmagneten 22 über den Luftspalt 12 zum Südpol des ersten Ringmagneten 21. Der Weg des magnetischen Flusses 25 geht hierbei auch über das im Luftspalt 15 angeordnete Hall-Element 16. Ferner verlaufen die Magnetlinien des magnetischen Flusses des Zusatzmagnets 17 im Stator 10 ebenfalls vom Nordpol zum Südpol des Zusatzmagneten 17, wobei die Polarisationsrichtung so ausgerichtet ist, daß die Magnetlinien des Zusatzmagneten 17 im Bereich des Hall-Elements 16 parallel und in gleicher Richtung zu den Magnetlinien der Ringmagnete 21, 22 verlaufen. Selbstverständlich kann der Magnetfluß auch in entgegengesetzter Richtung verlaufen. Bereits bei Stillstand der Meßvorrichtung 10 wird somit das Hall-Element 16 vom Magnetfluß des Zusatzmagneten 17 durchströmt, was eine magnetische Induktion B im Hall-Element 16 hervorruft. Bewegt sich nun der Rotor 11 relativ zum Stator 10, d.h. wird eine Winkelbewegung bestimmt, so nimmt je nach Drehrichtung der magnetische Fluß 25 durch das Hall-Element 16 zu oder ab. In der Figur 4 ist hierzu die Flußänderung (Induktion B) über den Drehwinkel dargestellt. Mit der Nummer 23 ist hierbei der Verlauf einer Meßkurve ohne einen Zusatzmagneten 17 dargestellt und mit der Nummer 24 ist der Verlauf einer Meßkurve bei vorhandenem Zusatzmagneten 17 erkennbar. Aufgrund der konstruktiven Ausbildung ist hierbei die Änderung der Stärke des magnetischen Flusses linear zum zu bestimmenden Drehwinkel des Rotors 11 gegenüber dem Stator 10, da innerhalb dieses Drehwinkelbereichs aufgrund der homogenen radialen Magnetisierung der beiden Ringmagnete 21, 22 ein konstanter Flußzuwachs (Induktion B) bzw. eine kontante Flußabnahme pro Winkeleinheit entsteht. Wie aus der Figur 4 erkennbar, weist der lineare Meßbereich A innerhalb des linearen Meßbereichs keinen Vorzeichenwechsel auf. Aufgrund der Stärke des Zusatzmagneten 17 kann die Meßkurve so verschoben werden, daß bei der Meßkurve 24 (mit Zusatzmagnet 17) der lineare Bereich A keinen Vorzeichenwechsel mehr hat. Idealerweise kann hierbei der Beginn des linearen Meßbereichs A in den Nullpunkt der Induktion B gelegt werden. Hinzuweisen sei noch darauf, daß in bekannter Weise die magnetische Induktion B im Hall-Element 16 ein elektrisches Ausgangssignal erzeugt, das linear zum zu bestimmenden Drehwinkel verläuft. Selbstverständlich wäre es auch bei der Ausführung nach der Figur 1 grundsätzlich möglich, die Ausbildung des Rotors und des Stators untereinander zu vertauschen.

Bei der Ausbildung nach der Figur 2 ist der Rotor 11a im Inneren des Stators 10a angeordnet. Der Stator 10a ist hierbei als Ring ausgebildet und weist wiederum die beiden schlitzartigen Luftspalte 14, 15 auf. Wiederum befindet sich im Luftspalt 15 das Hall-Element 16 und im Luftspalt 14 der Zusatzmagnet 17, der wiederum die Aufgaben und Eigenschaften wie beim Ausführungsbeispiel nach der Figur 1 aufweist. Selbstverständlich können der Zusatzmagnet 17 und das Hall-Element 16 in den jeweiligen Schlitzen 14 bzw. 15 untereinander vertauscht angeordnet sein. Der Rotor 11a ist mit einer Welle 40 verbunden, deren Drehbewegung bestimmt werden soll und ragt in das Innere des Stators 10a wobei sich zwischen Rotor 11a und Stator 10a wieder der kleine Luftspalt 12 befindet. Im Unterschied zum Ausführungsbeispiel nach der Figur 1 ist nur der erste Ringmagnet 21 vorhanden, seine Ausbildung entspricht der nach der Figur 1. Der zweite Ringmagnet 22 beim Ausführungsbeispiel nach der Figur 1 fehlt hier. Dies ist möglich, insbesondere dann wenn keine sehr hohen Anforderungen an die Linearität des Meßbereichs A gestellt werden. Der Bereich zwischen den Enden des Ringmagneten 21 ist statt des zweiten Ringmagneten jetzt mit magnetisch nicht leitendem Material, z. B. Luft oder Kunststoff ausgefüllt. Der Ringmagnet 21 ist somit beim Ausführungsbeispiel nach der Figur 2 in eine Ausnehmung 41 der Außenwand des Stators 11a eingesetzt. Die Funktionsweise entspricht der der Meßeinrichtung nach der Figur 1. Bei der Drehbewegung des Rotors relativ zum Stator wird die magnetische Induktion B im Bereich des Hall-Elements 16 verändert und somit ein Meßsignal erzeugt. Der magnetische Fluß des Zusatzmagneten 17 erzeugt wiederum eine konstante, permanente Vormagnetisierung im Hall-Element 16. Der magnetische Fluß des Ringmagneten 21 verläuft hierbei vom Nordpol des Ringmagneten 21 über den Luftspalt 12, durch den Stator 10a zurück über den Luftspalt 12 und den Rotor 11a zum Südpol des Ringmagneten 21.

Das Ausführungsbeispiel nach der Figur 3 entspricht in seinem konstruktiven Aufbau dem nach der Figur 1. Während beim Ausführungsbeispiel nach der Figur 1 zwei Schlitze 14, 15 im Stator 10 für den Zusatzmagneten 17 bzw. für das Hall-Element 16 vorhanden sind, ist beim Ausführungsbeispiel nach der Figur 3 ein durchgehender Schlitz 30 vorhanden. Der. Stator 10a ist hierbei als Vollkörper ausgebildet. Das Hall-Element 16 ist in axialer Richtung des Schlitzes 30 gesehen in der Mitte des Schlitzes 30 angeordnet. Der Zusatzmagnet 17 nimmt die gesamte Breite des Spaltes 30 ein. Im Unterschied zur Ausbildung nach der Figur 1 schließen sich beim Ausführungsbeispiel nach der Figur 3 die Feldlinien des Zusatzmagneten 17 nicht im Stator 10 selbst, sondern verlaufen über den Spalt 12 im äußeren Eisenring des Rotors 10. Da dieser Eisenring des Rotors 10 rotationssymmetrisch ist, bleibt die Vormagnetisierung des Hall-Elements 16 aufgrund des Zusatzmagneten 17 bei Verdrehen des Rotors 10 konstant.

Statt der in den Ausführungsbeispielen dargestellten, übereinander angeordneten Stator- und Rotor, können Stator und Rotor auch als Scheiben nebeneinander ausgebildet sein.

## Patentansprüche

1. Meßvorrichtung zur berührungslosen Erfassung eines Drehwinkels zwischen einem Stator (10) und einem Rotor (11), wobei sich zwischen Stator (10) und Rotor (11) ein Luftspalt (12) befindet und im Stator (10) mindestens ein Luftspalt (14, 15) ausgebildet ist, wobei sich in dem mindestens einen Luftspalt (14, 15) mindestens ein magnetfeldempfindliches Element (16) befindet und wobei im Rotor (11) mindestens ein Ringmagnet (21, 22) mit in radialer Richtung ausgerichteter magnetischer Polarisierung angeordnet ist, **dadurch gekennzeichnet, daß** im Magnetfeld des mindestens einen Ringmagnteten (21, 22) ein Zusatzmagnet (17) angeordnet ist, dessen Magnetfluß durch das magnetfeldempfindliche Element (16) verläuft.

2. Meßvorrichtung nach Anspruch 1, **dadurch gekennzeichnet, daß** der Zusatzmagnet (17) neben dem magnetfeldempfindlichen Element (16) im Luftspalt (14, 15) angeordnet ist.

3. Meßvorrichtung nach Anspruch 1 und/oder 2, **dadurch gekennzeichnet, daß** der Zusatzmagnet (17) über die gesamte Breite des Luftspalts (14, 15) sich erstreckt.

4. Meßvorrichtung nach einem der Ansprüche 1 bis 3, **dadurch gekennzeichnet, daß** der Zusatzmagnet (17) in einem zweiten Luftspalt (15) angeordnet ist.

5. Meßvorrichtung nach einem der Ansprüche 1 bis 4, **dadurch gekennzeichnet, daß** der erste Ringmagnet (21) eine zum zweiten Ringmagneten (22) gegensinnige magnetische Polarisierung aufweist.

6. Meßvorrichtung nach einem der Ansprüche 1 bis 5, **dadurch gekennzeichnet, daß** der Stator (10) zwei Luftspalte aufweist, die einen Abstand von 180° aufweisten.

7. Meßvorrichtung nach einem der Ansprüche 1 bis 6, **dadurch gekennzeichnet, daß** der Stator (10) und der Rotor (11) aus magnetisch leitendem Material bestehen.

8. Meßvorrichtung nach einem der Ansprüche 1 bis 7, **dadurch gekennzeichnet, daß** das magnetfeldempfindliche Element ein Hall-Element (16) ist.

## Claims

1. Measurement apparatus for non-contacting detection of a rotation angle between a stator (10) and a rotor (11), with an air gap (12) being located between the stator (10) and the rotor (11) and at least one air gap (14, 15) being formed in the stator (10), with at least one element (16) which is sensitive to magnetic fields being located in the at least one air gap (14, 15) and with at least one ring magnet (21, 22), with its magnetic polarization aligned in the radial direction, being arranged in the rotor (11), **characterized in that** an additional magnet (17) is arranged in the magnetic field of the at least one ring magnet (21, 22) and its magnetic flux runs through the element (16) which is sensitive to magnetic fields.

2. Measurement apparatus according to Claim 1, **characterized in that** the additional magnet (17) is arranged in the air gap (14, 15) alongside the element (16) which is sensitive to magnetic fields.

3. Measurement apparatus according to Claim 1 and/or 2, **characterized in that** the additional magnet (17) extends over the entire width of the air gap (14, 15).

4. Measurement apparatus according to one of Claims 1 to 3, **characterized in that** the additional magnet (17) is arranged in a second air gap (15).

5. Measurement apparatus according to one of Claims 1 to 4, **characterized in that** the first ring magnet (21) is magnetically polarized in the opposite sense to the second ring magnet (22).

6. Measurement apparatus according to one of Claims 1 to 5, **characterized in that** the stator (10) has two air gaps, which are separated by 180°.

7. Measurement apparatus according to one Claims 1 to 6, **characterized in that** the stator (10) and the rotor (11) are composed of magnetically permeable material.

8. Measurement apparatus according to one of Claims 1 to 7, **characterized in that** the element which is sensitive to magnetic fields is a Hall element (16).

## Revendications

1. Dispositif de mesure pour détecter sans contact l'angle de rotation entre un stator (10) et un rotor (11), avec un entrefer (12) existant entre le stator (10) et le rotor (11) et au moins un entrefer (14, 15) dans le stator (10),
et avec au moins un élément magnéto-sensible (16) dans au moins l'un des entrefers (14, 15) ainsi que dans le rotor (11) avec au moins un aimant annulaire (21, 22) ayant une polarisation d'aimantation alignée dans la direction radiale,
**caractérisé en ce qu'**
un aimant complémentaire (17) est placé dans le champ magnétique d'au moins un aimant annulaire (21, 22), le flux magnétique de cet aimant complémentaire passant à travers l'élément magnéto-sensible (16).

2. Dispositif de mesure selon la revendication 1,
**caractérisé en ce que**
l'aimant complémentaire (17) est placé dans l'entrefer (14, 15) à côté de l'élément magnéto-sensible (16).

3. Dispositif de mesure selon la revendication 1 et/ou 2,
**caractérisé en ce que** l'aimant complémentaire (17) occupe toute la largeur de l'entrefer (14, 15).

4. Dispositif de mesure selon l'une des revendications 1 à 3,
**caractérisé en ce que**
l'aimant complémentaire (17) est prévu dans un second entrefer (15).

5. Dispositif de mesure selon l'une des revendications 1 à 4,
**caractérisé en ce que**
le premier aimant annulaire (21) présente une polarisation magnétique opposée à celle du second aimant annulaire (22).

6. Dispositif de mesure selon l'une des revendications 1 à 5,
**caractérisé en ce que**
le stator (10) comporte deux entrefers distants l'un de l'autre de 180°.

7. Dispositif de mesure selon l'une des revendications 1 à 6,
**caractérisé en ce que**
le stator (10) et le rotor (11) sont réalisés en une matière conductrice d'aimantation.

8. Dispositif de mesure selon l'une des revendications 1 à 7,
**caractérisé en ce que**
l'élément magnéto-sensible est un élément Hall (16).
